# EUROPEAN PATENT APPLICATION

(11) **EP 1 221 429 A1**
(43) Date of publication of application: **10.07.2002**
(21) Application number: 99973869.3
(22) Date of filing: 19.11.1999
(51) Int. Cl.: C02F 3/02

(54) **PREFABRICATED BIOLOGICAL PURIFICATION SYSTEM**

(30) Priority: 28.05.1999 CR 603699
(71) Applicant: Bruso, Luigi, San Francisco de Dos Rios, San José (CR); Bruso, Pier Enrico, San Francisco de Dos Rios (CR)
(72) Inventor: Bruso, Luigi, San Francisco de Dos Rios, San José (CR); Bruso, Pier Enrico, San Francisco de Dos Rios (CR)
(74) Representative: Cioni, Carlo
(86) International application number: PCT/CR99/00001
(87) International publication number: WO 00/73217

(57) **Abstract**

The prefabricated biological purification system is a complete unit to purify domestic sewage, enclosed within the technologic sector of the civil construction, specifically, in the field of sewage treatment systems. It is a very versatile system because it may be used in different kinds of constructions, ranging from one sole residence to condominiums, buildings, complete urbanizations, etc. with unitary or multiple units, depending on the needs.

The Prefabricated Biological Purification system is composed of two basic units consisting of two containers of variable dimensions, depending on the type, complete with all their modular elements, bottom, walls and cover, in addition to all the completely internal elements.

All components have a shape that allows their easy handling, transportation and assembly, with no need for special machinery or qualified labor.

The functioning of the system may be explained as follows: the most important purifying phase takes place in the first unit, which is a Prefabricated Biological Purifier Permit C.R. # 2540 and Permit Request EPO 98108512.9 with internal and external changes so as to optimize is functioning, in three consecutive fermentation phases: aerobic, anaerobic and decantation, with the possibility of internal re-circulation of the mud. The effluent of the purifier enters the second unit where it is evenly distributed through a fluid distributor. In this unit, the purification of the polluting matters by oxidation is completed thanks to a bacterial film that covers the filling material, since it is here where a consecutive anaerobic and partially anaerobic fermentation takes place. The effluent of the system may be poured into a receptive body with no need for further treatments.

The prefabricated biological purification system does not need any kind of treatments or periodic cleaning because it does not produce any mud, and since it does not need any machinery for its internal functioning, it has no usage costs, and since the whole unit is buried, it does not have any environmental impacts.

## Description

The prefabricated biological purification system is a system to purify domestic sewage enclosed in the technological sector of civil construction, in the field of sewage purifying treatments.

The problem sought to be solved with this prefabricated biological purification system is to purify domestic sewage in a satisfactory manner, using an easy and rapid installation system with a simple but efficient functioning that does not need any machinery or any periodic maintenance for its internal functioning.

It also intends to propose a practical and economic solution for constructors when dealing with the projection and construction of urbanizations, since the costs of the treatment plants currently used are very high, and the periodic and extraordinary maintenance costs fall on the whole community, not to mention their environmental impact, for, in most cases, they are placed on the surface where anyone can see them.

A main characteristic of this system is the modulization capacity of all its components, since a minimum of 25 people may be attended, without having a maximum limit.
It is important to point out that the minimum size for the optimal functioning of the prefabricated biological purification system is 25 users, as previously indicated, and the modular increase may be done in groups of 25 people, reason why the primary unit is respected, while the modular increase for the secondary unit may be done in groups of 50 people.

Also, with the prefabricated biological purification system, the responsibility for the proper use of the sanitary facilities on the part of users from each residential unit is individualized, for a bad use of such facilities creates problems only to those who generate them, and the repair and extraordinary maintenance expenses, in this case, fall on the thoughtless user and not the whole community.

The prefabricated biological purification system consists of two basic purifying units: The primary purifying unit, the Prefabricated Biological Depurator Patent Costa Rica # 2540 and Patent Request EPO 98108512.9, changed external and internally, is composed of prefabricated modular elements made of concrete with an octagonal elongated shape of 81 x 101 cm. in plant and 51 cm high (Fig. 3a, 4, 5, 6) assembled one on top of the other in order to obtain an octagonal container that varies in height according to the number of assembled modules (3 to 6 modules the most). The internal elements necessary for its functioning are installed inside: the inlet pipe (Fig. 7), the separation sheets with the fluid passage duct (Fig. 8), the trapezoidal diaphragm (Fig. 10) and the flow control element modified in the entrance space (Fig. 11). The container is completed with its respective octagonal-shaped cover (Fig. 12).

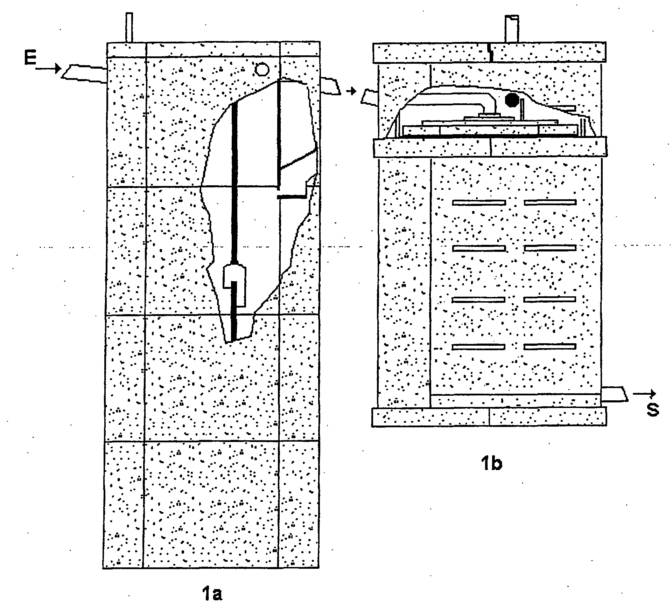

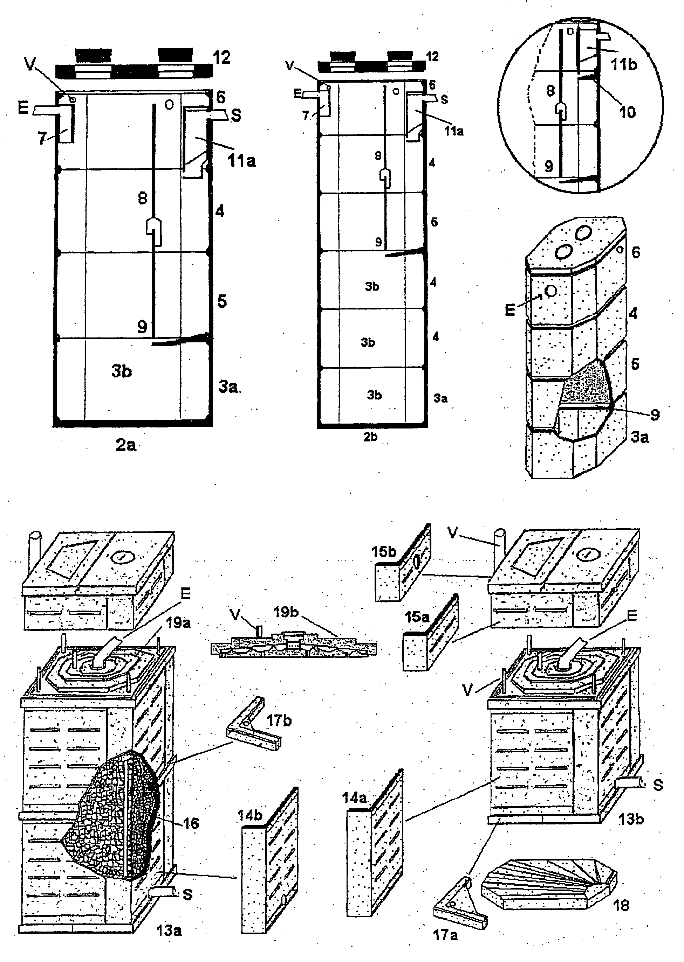

The amendments to the Patent C.R. # 2540 consist of a reduction in the height of the internal separation sheet and the placement of a semi-concave octagonal element in the third position from the upper part (Fig. 5). Between the diaphragm of the semi-concave element and the bottom of the internal separation wall (Fig. 9), there is a 5 cm. communicating space between the first two sectors that allows eventual mud that passes to the second sector thorough the fluid passage duct (Fig. 8), to come back to the first sector in the mud digestion zone (Fig. 3b). Also, a reserve for future use has been designed for the entrance of soapy waters on both sides of the upper octagonal element, in correspondence with the second internal sector (Fig. 6).

The secondary purifying unit is a container, in this case, with a cubic shape composed of modular L-shaped, prefabricated, 98 cm high panels made of concrete (Fig. 14a,14b), assembled with each other and placed on four triangular pieces with proper slots to fit the panels (Fig. 17a). In the center of these triangular pieces, an octagonal bottom piece is installed (Fig. 18). The panels in the upper part are assembled with a square structure composed of other four triangular pieces, and on this structure, a liquid distributor is installed (Fig. 19a, 19b). In case it is necessary to add more panels, four intermediate triangular pieces are installed between two modules. (Fig. 17b). Once all these elements are assembled, as previously explained, they compose a cubic container that varies in size according to the number of added modules. The interior of the container is filled with pebbles with a grain size distribution ranging between 2 and 4 cm Ø.

In the upper part of the secondary unit, four modular L-shaped elements, of 30 cm. high are installed on the dosing elements (Fig. 15a, 15b) and it is fully completed with a square cover with its respective little lid for inspections. This last part of the container has the outlet for the general ventilation tube of 10 cm Ø and the inlet pipe to the fluid distributor 10 cm. Ø.

The description of the invention may be done with reference to the included drawings, which must not be interpreted as restrictive for the use thereof.
Fig. 1 - Complete system (a) First purifying unit, (b) Second purifying unit.
Fig. 2 - First purifying unit, Prefabricated Biological Depurator Patent C.R. # 2540, with the respective changes, vertical section (a) Basic kind, (b) Increased type.
Fig. 3 - (a) Octagonal modular bottom element, 81 x 101 x 55 cm, (b) internal mud digestion zone.
Fig. 4 - Ring, octagonal modular element 81 x 101 x 51 cm.
Fig. 5 - Semi-concave octagonal modular element with a lower diaphragm (change) 81 x 101 x 5 cm.
Fig. 6 - Superior octagonal modular element (81 x 101 x 51 cm.) with supplementary entry holes for soapy waters (change).
Fig. 7 - Inlet pipe
Fig. 8 - Reduced separation sheet, with the fluid passage duct (change)
Fig. 9 - Characteristics of the horizontal fluid passage duct.
Fig. 10 - Upper trapezoidal diaphragm.
Fig. 11 - (a) Control flug element (change), (b) Control flug in concrete (change).
Fig. 12 - Octagonal cover with little lids for inspection.
Fig. 13 - Second purifying unit, (a) Basic type, (b) Reduced type.
Fig. 14 - Modular panels, 98 cm high, (a) Normal, (b) Outlet orifice.
Fig. 15 - Modular panels, 30 cm high, (a) Normal, (b) With reserve for future use of 10 cm. in diameter.
Fig. 16 - Characteristics of the internal filling material.
Fig. 17 - (a) Grooved triangular pieces, (b) Intermediate triangular pieces.
Fig. 18 - Bottom octagonal piece.
Fig. 19 - (a) Flow distributor, (b) Vertical section.
E = in, S = out, V = ventilation

The prefabricated biological purification system of domestic sewage, as previously explained, is a set of two purifying units and its functioning may be explained as follows: the sewage coming from the house enters the primary unit, where the main fermentation and decomposition phase takes place, consisting of three consecutive phases of decantation and aerobic and anaerobic fermentation, with the possibility of internal re-circulation of the semi-digested mud that passes from a sector to the other, thus allowing the almost complete decomposition of the solid particles that are not detected in the effluent and do not remain in the interior of the purifying unit, for they appear in the effluent in the form of microscopic already mineralized particles.

The excellent functioning efficiency occurs due to the high bacterial concentration existing in the interior of the first sector of the primary purifying unit, which allows the almost complete decomposition of the SSS (Sedimentable Suspended Solids) in approximately 99,9%, with an average effluent of > 0.1 m/LH and also a high reduction degree of the DBO₅ (Oxygen Biochemical Demand in 5 days) in approximately 96.5%, with an average effluent of 56 mg/L. Besides, the water acidity conditions remain neutral with a constant Ph between 6.5 and 7.5. In the secondary purifying unit, the DBO₅ values and the remaining Total Solids in Suspension are subsequently reduced, since the liquid passing through a filling material becomes oxygenized and the bacterial film covering such material allows, by retaining the bacteria, a subsequent phase of aerobic and partially anaerobic fermentation of the remaining polluting load. In this second purifying phase, no solids are detected and there is no mud formation.

The effluent of the prefabricated biological purification system, because of its high purifying degree, may be poured into any receiver container with no further treatment.

The filling material of the second unit may be of various kinds, like stone, coke, plastic segments, etc. provided that their diameter ranges between 2 and 4 cm.

The whole system and the machinery need no periodic maintenance for their internal operation. Besides, the entire unit is buried; therefore, it has no environmental impact.

For the fermentation processes, no chemical substance or lyophilized bacterial groups are needed.

## Claims

1. A prefabricated biological purification system for the treatment of domestic sewage composed of two main units: a primary purifying unit called Prefabricated Biological Purifier Permit Costa Rica # 2540 5-5-1999, and a Patent Request EPO 98108512.9, modified in its internal and external conformation; and a secondary purifying unit composed of various prefabricated panels made of concrete, plus their respective lower and upper union elements and the fluid distributor. All the elements that compose the set are modular, that is why the dimensions and the respective capacities of the containers vary according to the number of modules used.

2. A prefabricated biological purification system, according to the claim 1, **characterized by** the elements that compose the internal modification to the Patent C.R. # 2540: an inclined diaphragm individually built included in a modular element; an internal reduced separation sheet that includes the passage duct of the upper fluid, both of which form a passage duct for the horizontal fluid; also, a flow control element with the entrance space reduced in height

3. A prefabricated biological purification system, according to claim 1, **characterized by** the external modification to Patent C.R. # 2540, which consists in a holes for the entrance of soapy waters, located on both sides of the upper element corresponding to the second internal sector of the biological purifier (Fig. 6).

4. A prefabricated biological purification system, according to claim 1, **characterized by** all the elements that compose the secondary purifying unit: the panels in their various conformations that once assembled form the external structure; four triangular pieces and a central octagonal piece, both of which together compose the bottom element; four L-shaped elements with 3 cm orifices in the comers for the passage of the ventilation tube, which form the intermediate union structure of the panels, and a compact-shaped fluid distributor composed of an only piece.

5. A prefabricated biological purification system, **characterized by** two basic purifying units composed in turn by external and internal prefabricated modular elements made of concrete or other materials that adapt to the usage according to the needs, which, once assembled, are used to purify the sewage with no need for machinery or lyophilized bacterial groups along the purifying process.

6. A prefabricated biological purification system, according to claims 1 and 4, **characterized by** a compact-shaped one-piece fluid distributor made, made of concrete or any other material that adapts to the usage, with the reserves for future use for the ventilation tube and the fluid inlet tube that does not use any kind of machinery for functioning.

7. A prefabricated biological purification system, according to claims 1 and 2, **characterized by** an internal change to Patent C.R. # 2540, consisting of a passage of horizontal fluid that may be placed in different levels to the interior of the biological purifier, depending on the capacity of the latter, and conformed by a diaphragm included in an elongated octagonal element and a separation sheet perpendicular to this, which leaves an opening between both elements that internally allows the passage of the fluid from one sector to the other.

8. A prefabricated biological purification system, according to claims 1 and 5, **characterized by** all the complementary elements that compose the biological sewage purification system: a lower diaphragm, a reduced separation sheet, a modified fluid control element, and a one-piece liquid distributor.
